# EUROPEAN PATENT APPLICATION

(11) **EP 2 194 625 A2**
(43) Date of publication of application: **09.06.2010**
(21) Application number: 09162789.3
(22) Date of filing: 16.06.2009
(51) Int. Cl.: H02G 1/08

(54) **Cable pusher guiding system, method and device**

(30) Priority: 02.12.2008 EP 08170485
(71) Applicant: Swisscom AG, 3050 Bern (CH)
(72) Inventor: Wang, Yu, 3004 Bern (CH); Baeriswyl, Roland, 1718 Rechthalten (CH); Schmutz, Jean-Daniel, 1754 Avry-sur-Matran (CH); Mondada, Francesco, 1030 Bussigny-près-Lausanne (CH); Rey, François, 1752 Villars-sur-Glâne (CH); Croisier, François, 1926 Fully (CH); Terrien, Grégoire, 1025 St-Sulpice (CH); Burschka, Stefan, 3122 Kehrsatz (CH); Grüter, Peter, 8006 Zürich (CH)
(74) Representative: BOVARD AG

(57) **Abstract**

A steerable head 11 is described for guiding a pusher rod 10 through ducting. The pusher rod 10 is then used for drawing cables, wires, lines or pipes through the ducting. The steerable head 11 includes remotely operable mechanisms for steering the rod 10 through junctions or around obstacles in the ducting. In a further refinement, the steerable head 11 is provided with a coupling means 36 adapted to co-operate with a corresponding coupling means 26 mounted on a second rod, thereby allowing the pushing of rods through longer or more obstructed ducts.

## Description

The present application relates to arrangements for pulling cables, wires, cord, pipes, tapes or similar flexible materials through ducts, pipes or similar cavities where external access is restricted. In particular, but not exclusively, it relates to the feeding of cabling through pre-existing underground ducting.

Civil engineering projects such as roads and buildings are frequently fitted with ducts or spaces for the subsequent installation of cabled or piped services. Where possible, such ducts are designed to allow access to the interior space, so that obsolete or damaged cables can be removed, and so that new cables can be installed. To this end, access openings may be provided where necessary. In many situations, however, it is either not possible or not cost-effective to install access openings to allow easy access to every junction or corner of ducting.

Cabling of services to buildings is often installed in ducts which run underneath roads or pavements, or behind wall or floor surfaces, and the number and size of access openings to such ducting must be kept to a minimum. Since it is usually inconvenient and expensive to dig up roads, or to remove portions of wall or floor in order to gain access to the ducting, such alterations must be carried out from a limited number of access points.

It is known in the prior art to use cable pushers to feed cabling through ducting. Such cable pushers usually comprise a reel of stiff but bendable pushing rod which may be pushed, either manually or mechanically, through the ducting. The cable to be installed may be attached to the end of the rod being pushed into the ducting (the distal end), so that the cable is carried through the ducting with the rod from point where the rod is introduced into the ducting (the proximal access point). More usually, however, the rod will be pushed through the ducting without the cable until it reaches a destination access point, at which point the cable is attached to the distal end of the rod, and the rod is then pulled back through the ducting, pulling the cable with it. An intermediate stage may also be used, in which a "fishing line" is first pulled or pushed through the ducting using the pushing rod, so that the fishing line can be used subsequently to pull through other cables and/or lines.

Cable pushers can be used to push or pull cables for distances of several hundred metres. Various thickness of rod are used, from just a few millimeters in diameter to 15mm or more, depending on the distance to be covered and the size of the ducting.

Inaccessible ducting may comprise junctions or corners which make the use of cable pushers more difficult. In some cases, if the operator is familiar with the geometry of a ducting junction, he or she may be able, using skill and experience, to manipulate the near (proximal) end of the rod to improve the chances of the rod being fed into the desired path. It is also known in the prior art to mount a video camera and an illumination means to the distal end of the rod, thereby giving the operator some feedback which may aid the guiding of the distal end by manipulating of the proximal end, and which may help the operator to determine whether or not the rod is on the correct path. The method remains a time-consuming and error-prone procedure, however, requiring skilled technicians and much time. Furthermore, there are many types of ducting junction geometry though which the prior art push-rod feeding methods are simply not capable of feeding the rod. In such case, extra access openings must be added, or the surrounding road or building must be excavated to gain temporary access to the ducting. These options are expensive, inconvenient and time-consuming.

In the case of a ducting layout having, for example, a branched structure consisting of a main duct and several side-ducts, in which cabling is required between an end of the main duct and an access point on each of the side ducts, an entirely separate cable-feeding operation must normally be performed for each side duct. Such a situation may be encountered, for example, in the underground ducting which supplies services to buildings along a street. A main duct may be located underneath the street, with side-duct branches for each building along the street. Each junction between the main duct and a side duct presents a problem for the operator, who either has to gain access to the junction (for example by digging up the road if no access point is available, or by re-routing pedestrian and vehicle traffic and opening a man-hole cover if such an access point is provided) or attempt to manipulate the rod around the junction in the required direction. Either option is time-consuming and may require skilled operators and/or official permission to interrupt traffic.

Furthermore, in many situations the cable-feeding operation will take place in ducting where cables are already installed. Each time a manual manipulation of the pusher rod is attempted, there is a risk of damage to the existing cabling.

When installing cables in a branched ducting system, the installation time, the labour and the risk of damage to existing cables are all multiplied by the number of side ducts in such a branched ducting structure.

The object of the present invention is to provide a system, method and device which overcome the above disadvantages of the prior art. In particular, the invention aims to reduce or obviate the need for the extra access points mentioned, and to enable the use of many ducting geometries and/or layouts which have hitherto been ruled out as impracticable.

In order to overcome the above and other disadvantages with the prior art, the invention includes a method of causing a first distal portion of a first longitudinal, flexible member, referred to as the first rod, to meet a second distal portion of a second longitudinal, flexible member, referred to as the second rod, within an enclosure having restricted access, referred to as the ducting. According to the method of the invention, the first distal portion and/or the second distal portion is/are provided with a remotely steerable head, the first distal portion is provided with a first coupling means, and the second distal portion is provided with a second coupling means for mechanically coupling to said first coupling means. The remotely steerable head enables an operator to remotely rotate and/or move laterally within the ducting the first distal portion and/or the first coupling means with respect to the second distal portion and/or the second coupling means, and the first distal portion and/or the second distal portion is further provided with visual feedback means for informing the operator of the relative disposition of the first coupling means and the second coupling means. The method of the invention involves the following steps:
a first step of pushing the first rod into the ducting through a first ducting access point, such that the first distal portion is advanced through the ducting towards a second ducting access point,
a second step of pushing the second rod into the ducting through the second ducting access point, such that the second distal portion is advanced through the ducting towards the first ducting access point,
a third step of determining, using said visual feedback means, when the said first distal portion and second distal portion are within a predetermined proximity of each other, and thereupon halting the first and second steps,
and a fourth step of using the remotely steerable head and the visual feedback means to guide the first coupling means to meet the second coupling means.

By inserting pusher rods from both ends of the ducting, and coupling the rods somewhere within the ducting, the operator is able to feed cables over longer distances and negotiate more complex ducting geometries, with less risk of damage to existing cables.

According to one embodiment of the invention, the method can be used for ducting which has a branching configuration comprising a main duct, and a first branch duct (2), the first ducting access point affording external access for feeding or withdrawing the first rod in the main duct, the second ducting access point affording external access for feeding or withdrawing the second rod along the first branch duct, and a distal end of the first branch duct communicating with the main duct at a first branch point along the length of the main duct. According to this embodiment, a second branch duct has a third ducting access point affording external access for feeding or withdrawing a third rod along the second branch duct, a distal end of the second branch duct communicating with the main duct at a second branch point along the length of the main duct, and the second step of pushing the second rod into the ducting through the second ducting access point, is such that the second distal portion is advanced through the ducting towards the first distal portion. This embodiment includes the following further steps:
a fifth step of pushing the third rod, having a third distal portion provided with a third coupling means into the second branch duct through the third ducting access point, such that the third coupling means is advanced through the second branch duct towards the first distal portion,
a sixth step of moving the first rod along the main duct, with the first coupling means coupled to the second coupling means, and moving the third rod along the second branch duct, while determining, using a second visual feedback means, when the said first and third distal portions are within a predetermined proximity of each other, and thereupon halting the movement of the first and third rods,
and a seventh step of using a remotely steerable head provided at the third distal portion, and the second visual feedback means, to guide the third coupling means to meet said first coupling means.

In this way, an operator can feed multiple pusher rods through multiple side-ducts and into a main duct in a single combined operation, instead of feeding each pusher rod through separately.

In a further embodiment of the method of the invention, the first and/or third steps include releasably attaching at the distal portion of at least one said rods a cable to be fed through the ducting, such that the cable is then conveyed with said at least one rod through the ducting, wherein one of said first second and third coupling means is attached to the cable such that the cable may be coupled to a further one of said first second and third coupling means, and wherein said fourth and/or seventh step include using a remotely steerable head to cause said one of said first second and third coupling means to couple to said further one of said first second and third coupling means.

In this embodiment, the operator can save yet more time and labour by already feeding the cable(s) into the ducting with the pusher rod(s) so that it is a coupling means on the cable which is coupled, using the steerable head, to the other coupling means. This eliminates the need for first pulling the pusher rod(s) right through the ducting and then using the pusher rods to pull the cable through.

According to the invention, a system is provided which corresponds to the embodiments of the invention described above. The system is for feeding cables through an enclosure having restricted access, hereafter referred to as the ducting, the ducting having a first access opening and a second access opening, and the system comprises a first flexible rod for inserting into the first access opening, the first flexible rod having a first distal portion, being a part of the first flexible rod inserted into the ducting, and a first proximal portion, being a portion of the first flexible rod remaining outside the ducting, a second flexible rod for inserting into the second access opening, the second flexible rod having a second distal portion, being a part of the second flexible rod inserted into the ducting, and a second proximal portion, being a portion of the second flexible rod remaining outside the ducting, coupling means for mechanically coupling the first distal portion and second distal portions. In the system according to the invention, the coupling means comprises a first coupling head for mounting at the distal end of the first flexible rod and a second coupling head for mounting at the distal end of the second flexible rod, the first and second coupling heads being operable to, under control of an operator, cooperate with each other so as to provide a mechanical coupling between the distal ends of the first and second flexible rods, and at least one of the first and second coupling heads comprises remote guiding means for enabling the operator to remotely guide the said at least one of the first or second coupling heads relative to the other of the first and second coupling heads.

As described above in connection with the method of the invention, by inserting pusher rods from both ends of the ducting, and coupling the rods somewhere within the ducting, the operator is able to feed cables over longer distances and negotiate more complex ducting geometries, with less risk of damage to existing cables.

In an embodiment of the system of the invention, the remote guiding means comprises a remotely steerable head provided at one or each of said first or second distal portions of said first and/or second rods, the remote guiding means being capable of, under control of an operator, being rotated about a longitudinal axis of the one or each first and/or second rod, and/or being angled away from the longitudinal axis of the one or each first and/or second rod. The use of the steerable head enables the user to achieve a quick and secure coupling between the coupling means of the rods.

In a further embodiment of the system of the invention, one of the first or second coupling heads is provided with multiple coupling means such that a plurality of other coupling heads may be coupled to the multiple coupling means. In this way, multiple rods or cables can be pulled through the ducting in a single combined operation, thus saving significant time and labour.

The invention also foresees the provision of a guide device for use in the method and system described above. The guide device can be mounted at a distal end of a first rod, and the guide device comprises: a main body part for mounting to the distal end of the first rod, a steerable head part, a flexible linkage for mechanically linking the steerable head part to the main body part, communication means for communicating steering information from an operator to the guide device, the main body part, the steerable head part and the flexible linkage being arranged so as to enable the steerable head part to be moved, under control of the operator, between a straight orientation, in which a principal axis of the steerable head part is substantially parallel to a longitudinal axis of the first rod, and an angled orientation, in which the principle axis of the steerable head part is angled away from the longitudinal axis of the first rod. By remotely controlling the position of the steerable head, and using feedback from the steering information means, the operator can guide the steerable head and use it to effect the coupling described in relation to the method and system above.

It is important to note that, while a coupling means may advantageously be formed as part of the steerable head in the case where the steerable head itself is coupled to a second coupling head, the invention is defined in wider terms. In particular, the coupling means may be provided on a cable instead of on the steerable head. In this case, the steerable head may be simply used to guide the coupling means on the cable to meet the coupling head to which it is to be coupled. Alternatively, the steerable head may be provided with a means for coupling the coupling means on the cable to a second coupling means on, for example, a second coupling head or a second cable.

The guide device according to the invention may comprise means for rotating the main body part and/or the steerable head part substantially about the longitudinal axis of the first rod. These simple degrees of freedom require a relatively simple, and therefore reliable, mechanism, and are enough for the operator to control of the steerable head to achieve the desired coupling.

In a further embodiment of the guide device of the invention, the means for rotating the main body part and/or the steerable head part may comprise an electric motor and a gearing means. Such components are readily available, can be implemented such that they take up very little space, and are reliable, robust mechanisms.

In a further embodiment of the guide device according to the invention, the steerable head part may be provided with a coupling means for mechanically coupling to a second coupling means provided at a distal portion of a second rod. This enables, using a simple construction, the steerable part and the coupling function to be combined into one unit, thereby reducing the size of the device and simplifying the system of coupling from two ends of the ducting.

In a further embodiment, the guide device of the invention comprises visual feedback means for providing the operator with visual information about at least one of: the rotational position of the main body part and/or the steerable head part about the longitudinal axis of the pusher rod, the angled orientation of the steerable head part with respect to the longitudinal axis of the pusher rod, and the position of the first coupling means with respect to the second coupling means. Visual feedback gives the operator improved control of the steerable head and enables a quicker and surer coupling of the coupling means to each other.

In one embodiment, the visual feedback means comprises a camera mounted on or within the steerable head, the main body part or the first coupling means. By incorporating the camera into the steerable head or the first coupling means, a close-up view of the coupling process can be achieved. Mounting the camera on the main body part of the steerable head offers a wider view of the vicinity of the coupling.

In a further embodiment of the invention, the guide device may comprise a gravitational sensor means for providing information enabling the operator to judge the up/down orientation of the visual information from the visual feedback means. This enables the operator to determine more easily the desired steering direction.

According to a further aspect of the invention one or more instances of the guide device described above can be coupled to a coupling device designed to cooperate with the one or more guide devices. The coupling device is for mounting at the distal portion of the second rod and comprises one or more of said second coupling means, the or each second coupling means being for mechanically cooperating with the first coupling means of said one or more guide devices. In a further embodiment, the coupling device of the invention has one or more second coupling means which are arranged such that, when two or more first coupling means of two or more guide devices are coupled to the coupling device and while being pulled through the ducting, the two or more guide devices are distributed in a substantially non-overlapping arrangement along the ducting. This coupling device enables the coupling of multiple rods or cables, thus greatly reducing the cable installation time in branched ducting layouts, for example. By staggering the longitudinal position of devices coupled to it, the overall diameter or width of the assembly can be reduced, making it easier to draw through the ducting.

These and other advantages of the invention will become apparent from the following description, with reference to the accompanying drawings, in which:
Figures 1 and 2 show schematically the use of a steerable head to guide a pusher rod at ducting junctions.
Figure 3 shows a steerable head according to the invention.
Figure 4 illustrates a longitudinal sectional view of a steerable head.
Figure 5 shows the coupling of two rod ends using compatible coupling heads.
Figure 6 shows in schematic form a passive coupling head mounted on the end of a pusher rod.
Figure 7 shows a schematic illustration of feed cable into a branched ducting arrangement in a street.
Figure 8 shows in schematic form a mechanized cable pusher feeding a pusher rod into a duct, with a steerable head mounted on the distal end of the pusher rod.
Figure 9 shows one kind of coupling head capable of coupling with multiple other coupling heads.
Figure 10 shows a second kind of coupling head for coupling with multiple other coupling heads.

Note that references in this application to ducts or ducting should be understood to include any substantially elongated void suitable for accommodating or protecting cables, pipes, wires and the like. By the same token, references to cables should be understood to include any flexible, elongated item which can be pushed or pulled through a duct. References to rods should be understood to include pusher rods designed to be used for pushing or pulling cables, wires, lines or pipes through the ducting; alternatively, the term may refer to cables, wires, lines or pipes sufficiently stiff and flexible to be pushed through ducting directly.

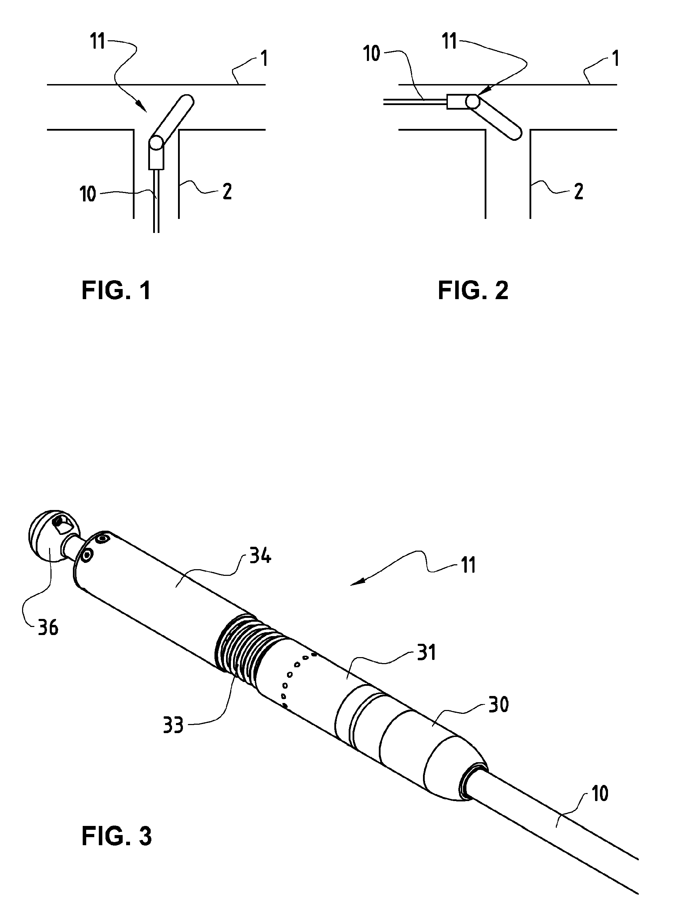

Referring to figures 1 and 2, in which the principle of using a steerable head to negotiate junctions in ducting is illustrated schematically, it can be seen that the steerable head 11 allows the rod 10 to be guided along a desired course at a junction. In figure 1, the rod 10 has been fed through duct 2 into duct 1, where the steerable head 11 has been angled to the right in order to guide the rod 10 into the right-hand part of duct 1. In figure 2, it can be seen that rod 10 is being fed along duct 1, and the steerable head 11 has been angled such that the rod will be diverted into side-duct 2.

Figure 3 shows an example of a steerable head 11 comprising a main body part 30, 31 attached at the end of rod 10, a steerable part 34 and a flexible link 33 which allows the steerable part to be angled relative to the main body part 30, 31. A head part 36 is also shown - in the simplest form of the invention, the head part 36 is shaped so as to reduce friction with the duct wall when the steerable head is being used to guide the rod through a junction. The head part may simply be a rounded shape, or it may incorporate revolving contact parts such as one or more wheels or rollers or captive spheres to further reduce friction on contact with the duct wall.

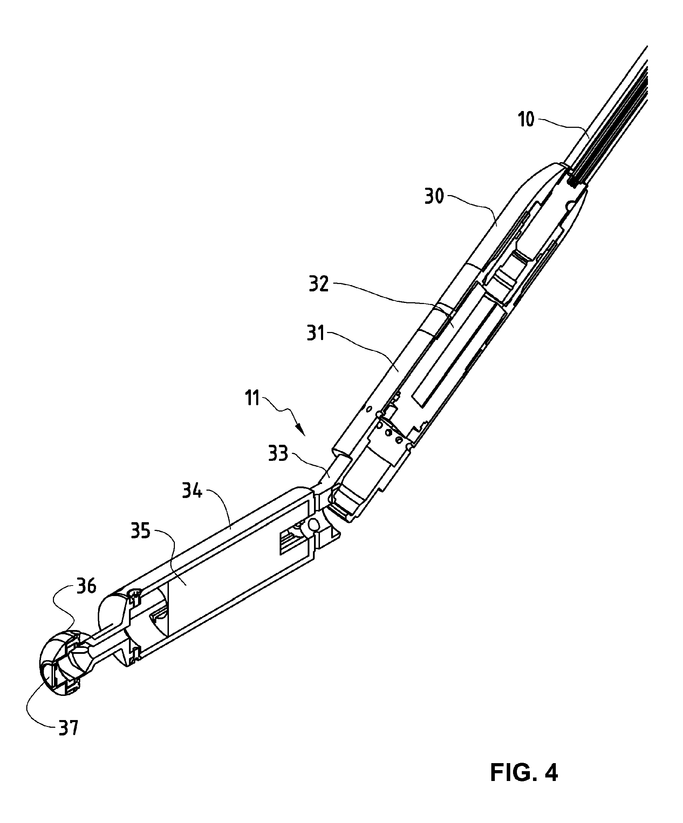

Rotation of at least part of the steerable head 11 is made possible by means of a rotary drive part 31. As will be seen in figure 4, the angling of the steerable part 34, and the rotation of the steerable head 11, can be realized using motors and gears within the housing of the steerable head. Visual feedback may be provided to the operator of the steerable head, for example by means of a a camera provided in the head part 36 (or at any suitable position on the steerable head 11). A light source may also be provided for illuminating the interior of the duct.

Power and control/feedback signals can be conveyed to and from the steerable head along wires (not shown) linking a control device such as a laptop computer to the steerable head 11. The wires may be routed inside the rod 10. Alternatively, the steerable head may contain its own power source, such as batteries. Control and feedback signals may be communicated to and/or from the steerable head via a wireless link (not shown).

Figure 4 shows a sectional view of an example implementation of the steerable head 11 comprising a camera 37 mounted in the ball-shaped head part 36. Mechanisms 32 and 35 are used to control the rotation of the assembly 11 and the angling of the steerable part 34 respectively. These mechanisms 32 and 35 may be motors with gearing units to provide the required motion. Control signals for the motors, image signals from the camera and electrical power for the steerable head may be routed, as shown, through the rod 10.

Using the rotation and angling mechanism, together with visual information (images) from the camera, the operator can control the orientation and position of the steerable head 11 with respect to the end of the rod 10. The operator is also able to advance or withdraw the rod 10 within the duct. This combination of controls gives the operator the ability to guide the steerable head within the ducting - round corners, through junctions or past obstacles in the ducting. The operator may also use the steerable head and the information from the camera to find a second rod within the ducting and even to couple to the end of the second rod. This coupling of rods means that rods may be fed into ducting from two separate access points and then linked up at the point where they meet. One rod can then be withdrawn, pulling the other rod with it. In this way, cables may be fed through longer distances of ducting, or through junctions where one rod with a steerable head would not pass. The steerable head, together with visual feedback from the camera, enables the operator(s) to easily bring the ends of the two rods together and if necessary to perform a coupling operation between the two, such that they can then be pulled through the ducting without uncoupling.

Note that the steerable head will normally rotate while the rod 10, 20 is being pushed through the ducting. The operator therefore has no information about the orientation of the steerable head. The image from the camera in the steerable head may be difficult or impossible to interpret without any information about the camera's orientation. The camera of the steerable head may therefore be provided with a gravity sensor for detecting the UP/DOWN orientation of the head and communicating this information to the operator. This enables the operator better to control the steerable head to achieve the desired routing of the cable, for example. Without the UP/DOWN information, the operator may in some cases be presented with a visual image of the inside of a ducting, but not know which way direction on the image corresponds to which direction on the intended routing plan.

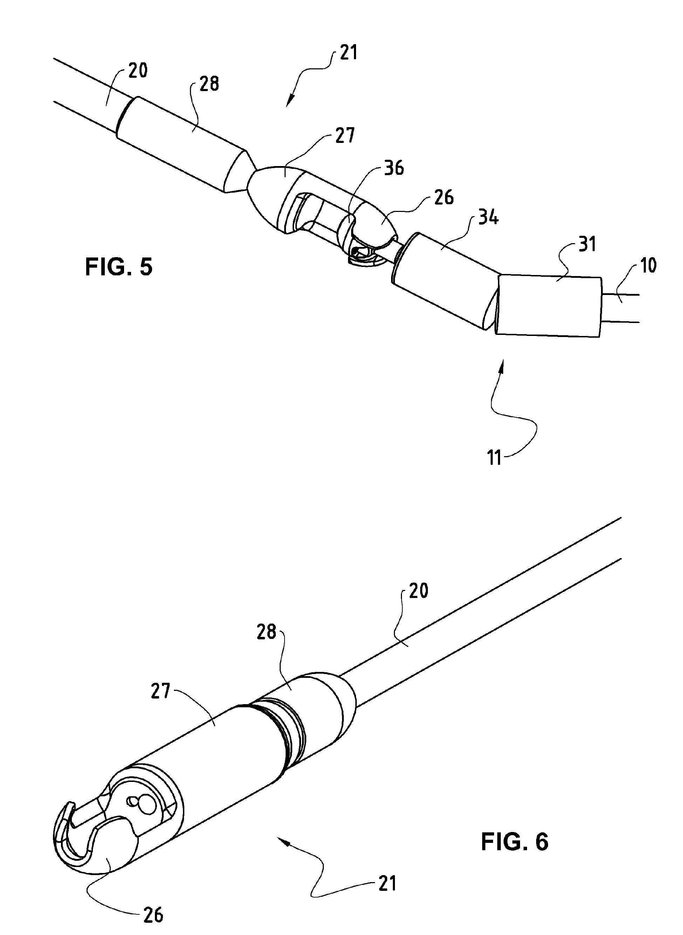

The gravity sensor may communicate the UP/DOWN information to the operator as supplementary information to help him or her understand the image sent from the camera. Alternatively, the gravity sensor may be used to rotate the image data from the camera automatically, so that the image which is then sent to the operator is always the righted image, in the UP orientation for example. In this way, the operator can easily understand the image from the camera without having to consider the UP/DOWN orientation of the camera. In addition to its guiding function, head part 36 may also be used as part of a coupling system, as discussed with reference to figures 5-10.

Figure 5 shows in schematic view how the steerable head 11 may be used to couple with a second, co-operating coupling head 21 mounted on a second rod 20. In the example shown, the steerable head comprises a ball-shaped coupling head 36 which is designed to co-operate mechanically with the head part 26 of the coupling head 21 on the second rod 20.

In order to bring the two coupling heads 11 and 21 together, the operator first feeds the two rods through the ducting towards each other from their respective access points, until he or she estimates that the coupling heads will be near each other. Then he uses the rotation and angling capabilities of the steerable head, if necessary also advancing or withdrawing one or both rods, until the two co-operating coupling heads meet and couple together.

The example coupling head 21 design of figure 5 is also illustrated in figure 6. Coupling socket 26 is designed such that, in one orientation it allows the ball 36 of the male coupling head 11 of figure 4 to enter the socket, but then to retain the ball 36 within the socket 26 when the two rods 10 and 20 are substantially coaxially aligned and/or when one of rods 10 and 20 is being pulled by the other of rods 10 and 20. The female coupling head 21 shown in figures 5 and 6 is mounted on rod 20 and may be provided with a means 28 for rotating the main body 27 and/or the socket 26 of the coupling head about the longitudinal axis of the rod 20.

In this further refinement, coupling head 21 may be provided with rotation means 28 for rotating the main body 27 and/or the head part 26 to allow easier access by the coupling part 36 of the steerable head 11. Rotation means may comprise electric motor and gearing elements within the housing of the coupling head 21. Remote control of the rotation by an operator may be implemented using wires, for example fed through the rod 20, or by wireless communication means. Power may also be provided through wires, or from batteries in or near the coupling head 21.

Note that the arrangement of figures 3 and 4 shows only one of the coupling heads (11) as being equipped with a steerable part (34) and a flexible linkage 33. However, either or both of the co-operating coupling heads may be provided with an angularly steerable part and/or a rotating drive.

In order to avoid the need for two operators to be involved in the coupling process (one for each rod), communication means may be provided such that one operator can control both the steerable head 11 and its co-operating coupling head 21. Wireless communication means may for example be provided in both the steerable head 11 and its co-operating coupling head 21, such that control signals transmitted from the steerable head 11 may received by the co-operating coupling head 21 and used to control the rotation of the latter.

It is also possible to implement both co-operating heads 11 and 21 as steerable heads with mutually compatible coupling heads. A camera and light source may be mounted on either or both of the heads 11 and 21.

In some instances, for example where cables or pusher rods are being drawn through the ducting in which cables are already installed, the existing cables may interfere or become tangled with the cables or rods being pulled through. To avoid such cases, the steerable head and the coupling can be arranged such that the operator 15 can, by controlling the rotation and/or angle of one or both of the coupling heads, uncouple them from each other.The male and female coupling arrangement shown in figures 5 and 6 is just one of many possible coupling arrangements which may be contemplated. Other potential arrangements include co-operating hooks and/or loops, mutually attracting magnets, or a latching trap or grab-type mechanism. Any coupling mechanism which can be operated by the use of the steerable head 11 could be used.

As mentioned previously, it is possible for a cable to be attached to the distal end of a push rod and fed into the ducting with the rod from a first access point to a destination access point. If the push rod is equipped with a steerable head as in the present invention, the steerable head may be used to guide both the rod and the cable through the ducting. When the rod and cable reach their destination, the cable can be release from the head/rod and the rod can be withdrawn.

Alternatively, the cable may be releasably attached to the distal end of the first rod 10 and/or its steerable head 11 and fed together into the ducting. A second rod, equipped with a coupling means, may be inserted from the cable's destination access point. The distal portions of the first and second rods are then pushed towards each other until they come into close proximity with each other, whereupon the steerable head is remotely controlled by the operator to release the cable from the first rod and couple it to the coupling means of the second rod 20. The first and second rods are then withdrawn to the access points 12, 22 where they were introduced into the ducting, and the cable, being coupled to the second rod, is pulled through to its destination. The coupling means can be as simple as hooks and loops, which can be coupled by steering the steerable head, or they can more complicated mechanisms, remotely operable by the operator. A steerable head may be on the first rod 10 or the second rod 20, or both. This variant of the invention has the additional advantages of reducing still further the number of individual operations to be carried out in feeding cables through the ducting.

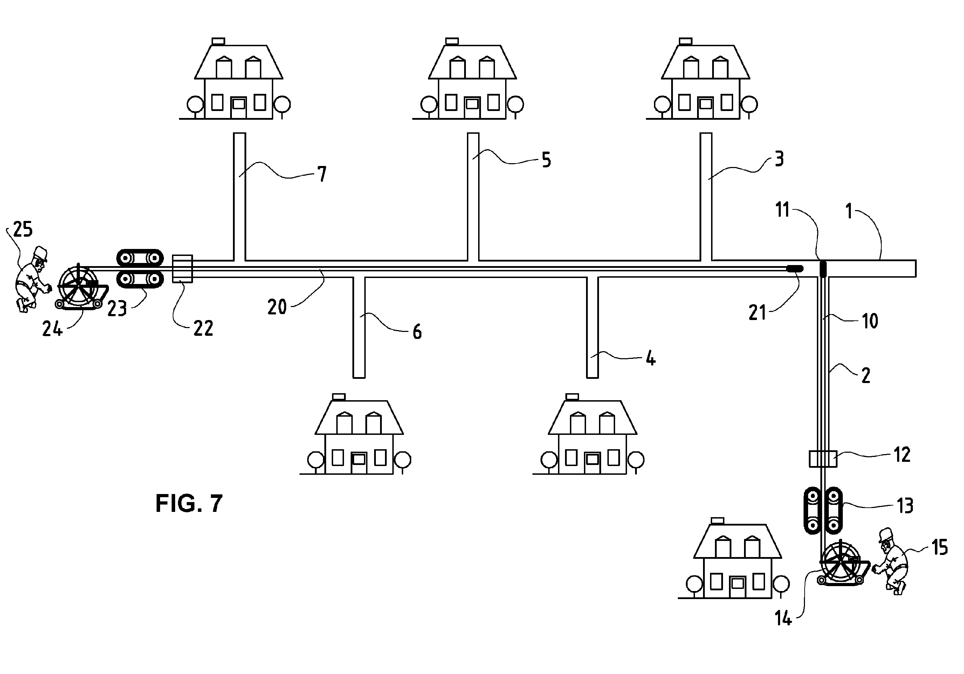

Referring to figure 7, the drawing shows a schematic representation of ducting for supplying cabled services to houses along a street. In order to feed a cable from access point 12 in side duct 2 to a second access point 22 in the main duct 1, a cable rod 10 can be inserted into duct 2 at access point 12 and pushed through the ducting until it reaches access point 22. The cable may then be attached to the end of the rod at access point 22, whereupon the rod may be withdrawn, pulling the cable, via main duct 1 and side duct 2, to access point 12.

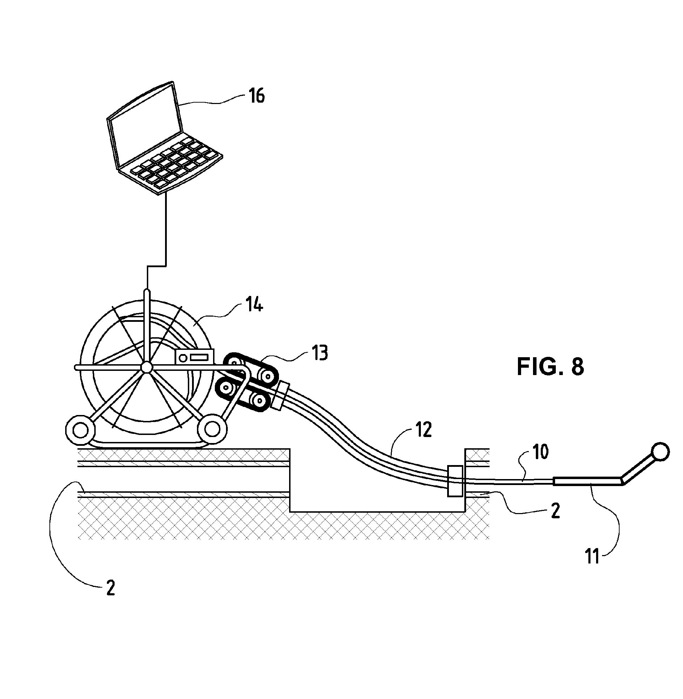

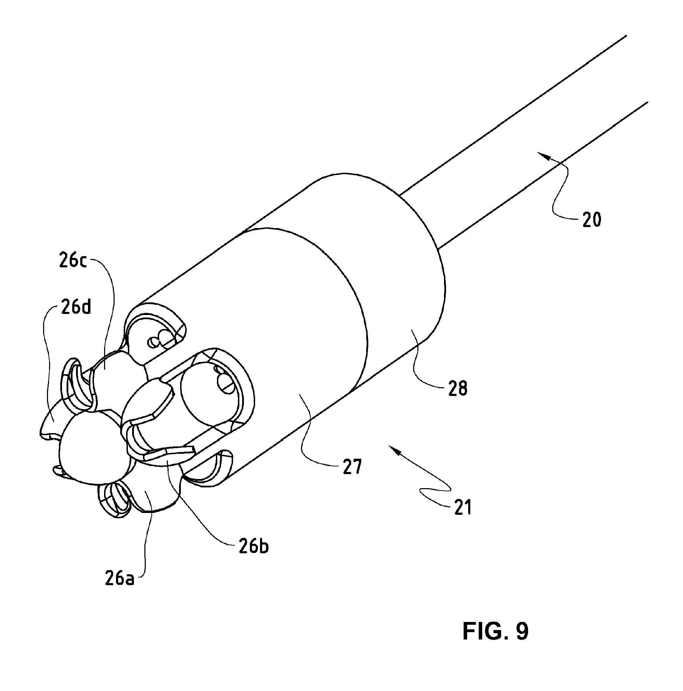

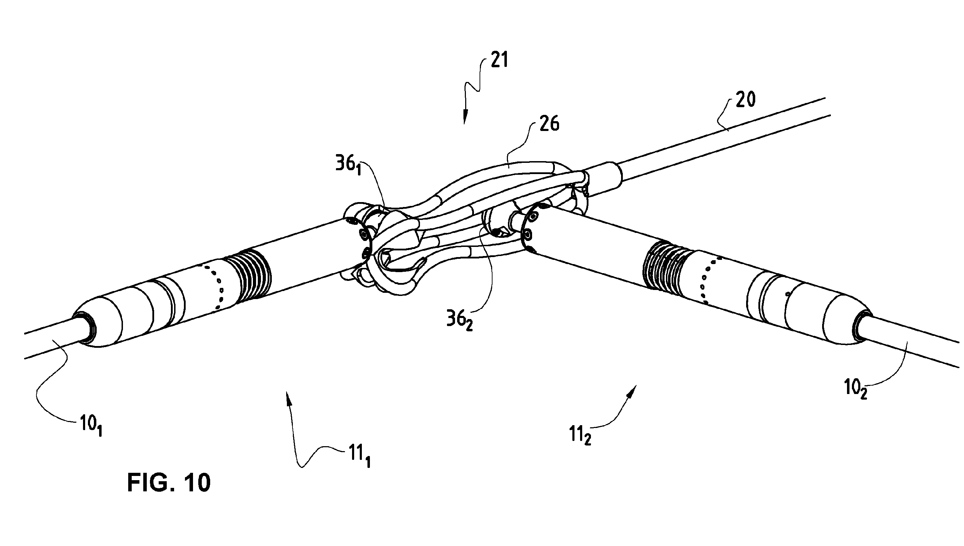

When inserting the rod 10, it may be pushed manually, or with mechanical assistance from a pusher unit 13, 14 under control of an operator 15. Such a mechanical pusher unit is illustrated in more detail in figure 8. The rod 10 must pass the T-junction at which side duct 2 meets main duct 1. In some situations, the rod may be made to bend into the main duct 1 if it is pushed hard enough. However, there is a chance that the rod will bend into the duct the wrong way, away from access point 22. Pushing the rod may also damage the ducting and/or any cabling or pipe-work which is already installed. For this reason, the present invention foresees that a steerable head 11 can be attached to the end of the rod 10 to help guide the rod around the T-junction. In a variant of the invention, the steerable head is provided with a means of coupling to a coupling means 21 mounted on a second rod 20. In this way, the rod 10 does not require guiding around the junction: instead, it only needs to couple to coupling means 21, whereupon the rod 10 may be pulled through the ducting by withdrawing rod 20 from the main duct. In a further variant of the invention, the coupling head 21 is designed to be able to couple to multiple rods in multiple side ducts. Thus, as rod 10 is withdrawn through main duct 1, pulling with it rod 10, it passes the end of side duct 3, then side duct 4 etc. According to this embodiment, the withdrawal of the rod 20 may be halted or slowed when in the vicinity of each subsequent side duct, so that rods inserted into these side ducts in the same way as rod 10 may also be coupled to the coupling head 21. When the rod 20 is finally pulled back to access point 22, it is thus pulling with it rods from some or all of the side ducts 2, 3, 4, 5, 6 and 7. Possible designs for such a multiple coupling head are discussed with reference to figures 9 and 10.

Figure 8 shows a schematic view of a cable pusher at an access point. An opening in duct 2 is provided for allowing insertion of rod 10 into the ducting. A guide 12 may be provided to facilitate pushing or pulling of the rod 10 into or out of the duct 2. The mechanical pusher comprises a reel 14 of flexible rod and a traction element 13, which can be used for pushing or pulling the rod 10. Figure 8 also shows a steerable head 11 mounted at the end of rod 10, and a laptop computer 16, which may be used by a cable feeding operator to remotely control the steerable head 11.

Figure 9 shows a schematic representation of an example of a multiple coupling head 21 as described above. The head is designed as a multiple instance of the single coupling head 21 illustrated in figure 6. In the example shown, the head comprises four coupling sockets 26a to 26d, however this number may be any suitable number, depending on the particular coupling arrangement required. Multiple coupling head of figure 9 may be provided with a rotation means 28 for rotating the coupling head 27 about its main axis so as to move an empty socket into a position convenient for a steerable head 11 to couple to it.

An alternative example of a multiple coupling head is hown in figure 10. In this example, coupling is performed by inserting the coupling head of the steerable head into an opening in a suitably shaped multiple coupling head mounted on rod 20. When rod 20 is then pulled through the ducting, any coupling heads 36 which are present inside the cage 26 are then captive, and rod 20 can be used to pull the rods 10₁, 10₂ etc through the ducting.

The multi-coupling arrangements illustrated in figures 9 and 10 are examples to illustrate the principle of this variant of the invention. In practice, the dimensions of the ducting and the dimensions of the coupling heads 11 and 21 may mean that multiple coupling heads will not pass easily through the ducting side by side. In this case the multi-coupling head 21 can be adapted such that the coupling heads 11₁, 11₂ etc., when coupled to the multi-coupling head 21, are staggered along the direction of travel of rod 20. This may be achieved, for example, by using an elongated multi-coupling head 21 with coupling sockets or openings along its length. In a simpler arrangement, coupling may be achieved using cord or line to connect each coupling head 11 to the multi-coupling head. In this case, the multiple coupling head may be merely a hook or loop, to which the cord or line of each coupling head is then attached or clipped by the action of steering the steerable head. The cords or lines of the various coupling heads 11₁, 11₂ etc. may be of different lengths, thus allowing the coupling heads to be pulled through the ducting by rod 20 without interfering with each other.

In some instances, for example where cables or pusher rods are being drawn through the ducting in which cables are already installed, the existing cables may interfere or become tangled with the cables or rods being pulled through. To avoid such cases, the steerable head and the coupling can be arranged such that the operator can, by controlling the rotation and/or angle of the steerable head 11 and/or multi-coupling head 21, uncouple the or each steerable head 11 from the multi-coupling head.

Some of the multi-coupling arrangements above describe a method in which multiple rods 10 with coupling heads 11 are inserted into side ducts 2, 3, 4 etc and are then coupled to a multi-coupling head 21. In these arrangements, the multiple rods are then pulled together by the multi-coupling head 21 and rod 20 through to their destination access point. The individual rods 10 are then used to pull through the required cables, lines, pipes etc. In a variant of this method, the steerable coupling means are used to carry the individual cables, lines, pipes through the side ducts and attach them to the multi-coupling head at the junction between the side duct and the main duct. To achieve this, a cable is first releasably attached at or near the coupling head of each rod 10 and fed, with the rod, into each side duct 2. When the coupling head and the multi-coupling head come into close proximity, the coupling head 11 and/or the multi-coupling head 21 is/are then remotely steered by the operator 15 such that the cable/line/pipe is released from the rod 10 and becomes coupled to the multi-coupling head 21. This variant of the invention has the addition advantages of reducing the volume of material to be pulled through the ducting and of reducing still further the number of individual operations to be carried out in feeding multiple cables through a branched ducting structure. In this case, the multi-coupling head 21 may be equipped with a means for selectably retaining the cable so that it can be pulled through. Alternatively, the end of the cable may be prepared as a loop, or fitted with a coupling means, before the cable is inserted into the side duct 2, so that the cable can then be coupled to the multi-coupling head under the control of the operator 15 by steering one or both of the coupling and multi-coupling heads.

## Claims

1. Method of causing a first distal portion of a first longitudinal, flexible member (10), hereafter referred to as the first rod, to meet a second distal portion of a second longitudinal, flexible member (20), hereafter referred to as the second rod, within an enclosure having restricted access, hereafter referred to as the ducting (1, 2), wherein
the first distal portion and/or the second distal portion is provided with a remotely steerable head (11, 21),
the first distal portion is provided with a first coupling means (36), and the second distal portion is provided with a second coupling means (26) for mechanically coupling to said first coupling means (36),
the remotely steerable head (11) is for enabling an operator (15, 25) to remotely rotate and/or move laterally within the ducting (1, 2) the first distal portion and/or the first coupling means (36) with respect to the second distal portion and/or the second coupling means (36), and wherein
the first distal portion and/or the second distal portion is further provided with visual feedback means (37) for informing the operator (15, 25) of the relative disposition of the first coupling means (36) and the second coupling means (26),
the method comprising:
a first step of pushing the first rod (10) into the ducting through a first ducting access point (12), such that the first distal portion (11) is advanced through the ducting (2, 1) towards a second ducting access point (22),
a second step of pushing the second rod (20) into the ducting (1) through the second ducting access point (22), such that the second distal portion is advanced through the ducting (1, 2) towards the first ducting access point (12),
a third step of determining, using said visual feedback means (37), when the said first distal portion and second distal portion are within a predetermined proximity of each other, and thereupon halting the first and second steps,
a fourth step of using the remotely steerable head (11) and the visual feedback means (37) to guide the first coupling means (36) to meet the second coupling means (26).

2. Method according to claim 1, wherein the ducting (1, 2, 3) has a branching configuration comprising a main duct (1),
wherein a first branch duct (2), the first ducting access point (22) affording external access for feeding or withdrawing the first rod (20) in the main duct (1), the second ducting access point (12) affording external access for feeding or withdrawing the second rod (10) along the first branch duct (2), and a distal end of the first branch duct (2) communicating with the main duct at a first branch point along the length of the main duct (1),
wherein a second branch duct (3) having a third ducting access point affording external access for feeding or withdrawing a third rod along the second branch duct (3), a distal end of the second branch duct (3) communicating with the main duct (1) at a second branch point along the length of the main duct (1),
and wherein the second step of pushing the second rod (20) into the ducting (1) through the second ducting access point (22), is such that the second distal portion is advanced through the ducting (1, 2) towards the first distal portion,
the method further comprising:
a fifth step of pushing the third rod, having a third distal portion provided with a third coupling means (36₂) into the second branch duct (3) through the third ducting access point, such that the third coupling means (36₂) is advanced through the second branch duct (3) towards the first distal portion,
a sixth step of moving the first rod (20) along the main duct (1), with the first coupling means (36₁) coupled to the second coupling means (26), and moving the third rod along the second branch duct (3), while determining, using a second visual feedback means, when the said first and third distal portions are within a predetermined proximity of each other, and thereupon halting the movement of the first and third rods,
a seventh step of using a remotely steerable head (11₂) provided at the third distal portion, and the second visual feedback means, to guide the third coupling means (36₁) to meet said first coupling means (26).

3. Method according to claim 1 or 2, wherein
said first and/or third steps include releasably attaching at the distal portion of at least one said rods a cable to be fed through the ducting, such that the cable is then conveyed with said at least one rod through the ducting,
wherein one of said first second and third coupling means is attached to the cable such that the cable may be coupled to a further one of said first second and third coupling means,
and wherein said fourth and/or seventh step include using a remotely steerable head to cause said one of said first second and third coupling means to couple to said further one of said first second and third coupling means.

4. System for feeding cables through an enclosure having restricted access, hereafter referred to as the ducting (1, 2), the ducting having a first access opening (12) and a second access opening (22), the system comprising:
a first flexible rod (20) for inserting into the first access opening (12), the first flexible rod (20) having a first distal portion, being a part of the first flexible rod (20) inserted into the ducting, and a first proximal portion, being a portion of the first flexible rod (20) remaining outside the ducting (1,2),
a second flexible rod (10) for inserting into the second access opening (22), the second flexible rod (10) having a second distal portion, being a part of the second flexible rod (10) inserted into the ducting (1,2), and a second proximal portion, being a portion of the second flexible rod (10) remaining outside the ducting (1,2),
and coupling means (26, 36) for mechanically coupling the first distal portion and second distal portions,
the system being **characterized in that**
the coupling means comprises a first coupling head for mounting at the distal end of the first flexible rod and a second coupling head for mounting at the distal end of the second flexible rod, the first and second coupling heads being operable to, under control of an operator, cooperate with each other so as to provide a mechanical coupling between the distal ends of the first and second flexible rods, and
at least one of the first and second coupling heads comprises remote guiding means (11) for enabling the operator to remotely guide the said at least one of the first or second coupling heads relative to the other of the first and second coupling heads.

5. System according to claim 4, wherein the remote guiding means (11) comprises a remotely steerable head provided at one or each of said first or second distal portions of said first and/or second rods (10, 20), the remote guiding means (11) being capable of, under control of an operator, being rotated about a longitudinal axis of the one or each first and/or second rod (10, 20), and/or being angled away from the longitudinal axis of the one or each first and/or second rod (10, 20).

6. System according to claim 4 or 5, wherein one of said first or second coupling heads is provided with multiple coupling means such that a plurality of other coupling heads may be coupled to said multiple coupling means.

7. Guide device (11) for use in the method of claims 1 to 3 or the system of claims 4 to 6, the guide device (11) being for mounting at a distal end of a first longitudinal, flexible member (10) hereafter referred to as the first rod, the first rod (10) being for feeding through an enclosed space with restricted access, the guide device (11) comprising:
a main body part (31) for mounting to the distal end of the first rod (10),
a steerable head part (34),
a flexible linkage (33) for mechanically linking the steerable head part (34) to the main body part (31),
communication means for communicating steering information from an operator (15, 25) to the guide device (11),
the main body part (31), the steerable head part (34) and the flexible linkage (33) being arranged so as to enable the steerable head part (34) to be moved, under control of the operator (15,25), between a straight orientation, in which a principal axis of the steerable head part (34) is substantially parallel to a longitudinal axis of the first rod (10), and an angled orientation, in which the principle axis of the steerable head part (34) is angled away from the longitudinal axis of the first rod (10).

8. Guide device (11) according to claim 7, comprising means (30) for rotating the main body part (31) and/or the steerable head part (34) substantially about the longitudinal axis of the first rod (10).

9. Guide device (11) according to claim 8, in which the means (30) for rotating the main body part and/or the steerable head part (34) comprises an electric motor and a gearing means.

10. Guide device (11) according to one of claims 7 to 9, wherein the steerable head part (34) is provided with a coupling means (36) for mechanically coupling to a second coupling means (26) provided at a distal portion of a second rod (20).

11. Guide device (11) according to one of claims 7 to 10, further comprising visual feedback means (37) for providing the operator (15, 25) with visual information about at least one of:
the rotational position of the main body part (31) and/or the steerable head part (34) about the longitudinal axis of the pusher rod (10),
the angled orientation of the steerable head part (34) with respect to the longitudinal axis of the pusher rod (10),
and the position of the first coupling means (36) with respect to the second coupling means (26).

12. Guide device according to claim 11, wherein the visual feedback means (37) comprises a camera (37) mounted on or within the steerable head (34), the main body part (31) or the first coupling means (36).

13. Guide device according to claim 11 or 12, further comprising gravitational sensor means for providing information enabling the operator (15, 25) to judge the up/down orientation of the visual information from the visual feedback means (37).

14. Coupling device (21) for cooperating with one or more guide devices (11) according to claims 7 to 13, wherein the coupling device (21) is for mounting at said distal portion of the second rod (20) and comprises one or more of said second coupling means (26), the or each second coupling means (26) being for mechanically cooperating with the first coupling means (36) of said one or more guide devices (11).

15. Coupling device (21) according to claim 14, wherein the one or more second coupling means (26) are arranged such that, when two or more first coupling means (36) of two or more guide devices are coupled to the coupling device (21) and while being pulled through the ducting (1,2), the two or more guide devices are distributed in a substantially non-overlapping arrangement along the ducting (1,2).
